# NEW EUROPEAN PATENT SPECIFICATION

(11) **EP 1 504 154 B2**
(45) Date of publication and mention of the opposition decision: **23.11.2016**
(45) Mention of the grant of the patent: 13.03.2013
(21) Application number: 03725232.7
(22) Date of filing: 08.05.2003
(51) Int. Cl.: D21C 11/12, D21C 11/06

(54) **METHOD OF PRODUCING ENERGY AT A PULP MILL**
VERFAHREN ZUR ENERGIEERZEUGUNG IN ZELLSTOFFFABRIK
PROCEDE DE PRODUCTION D'ENERGIE AU NIVEAU D'UNE USINE DE PATE

(30) Priority: 13.05.2002 US 379406 P
(43) Date of publication of application: 09.02.2005
(73) Proprietor: Andritz Oy, 00180 Helsinki (FI)
(72) Inventor: SAVIHARJU, Kari, FIN-02340 Espoo (FI); SIMONEN, Jorma, Marietta, GA 30062 (US); KOIVISTO, Lasse, FIN-78870 Varkaus (FI); ARPALAHTI, Olli, FIN-78300 Varkaus (FI)
(74) Representative: Hoffmann Eitle
(86) International application number: PCT/FI2003/000358
(87) International publication number: WO 2003/095738

(56) References cited:
- US-A- 2 606 103
- US-A- 5 509 997
- NYGAARD, JOHAN: 'Sodapanna med extern överhettare', March 1998, VÄRMEFORSK, STOCKHOLM, ISBN 0282-3772 pages 1 - 75

## Description

In chemical pulp mills, wood bark is first removed from logs, after which the remaining wood is cut into chips and chemically processed (cooked) into fibers. Lignin and some carbohydrate material are dissolved from wood chips during cooking in alkaline cooking liquor. The lignin and carbohydrate material and the components of the cooking liquor form a waste liquor called black liquor. The yield from wood to fiber is generally less than 50%, and typically 46 to 48% yields. After cooking, the chemicals are recovered from black liquor by firing the black liquor in a recovery boiler alone or together with other "waste" streams. The firing process in the boiler is exothermic and the released energy is recovered as pressurized superheated steam. The steam energy is recovered in a steam turbine to produce electric power and low-pressure steam for other pulp process needs.

The black liquor and other "waste" streams have been recognized as biomass fuels, which are alternative fuel sources. Such alternative fuel sources reduce the need in a pulp mill for conventional fuels, such as coal and oil, and thereby reduce the amount of greenhouse gases produced by energy production using conventional fuels. Biomass fuels may be used to provide steam at high live pressure and temperature, which is an advantage in power generation efficiency.

Traditionally, energy is produced in a pulp mill by combusting black liquor in a recovery boiler, and wood wastes and bark in an auxiliary boiler (see e.g. US 5 509 997). The bark of the wood raw material and the organic substance of generated black liquor together normally supply the entire energy demand of the pulp mill. If more energy is needed in the pulp mill, additional fuel may be purchased. The additional fuel is combusted with the wood bark in the auxiliary boiler. Conventionally, energy is produced in a pulp mill in the following way: a recovery boiler and an auxiliary boiler, wherein waste wood bark from the mill is combusted to generate superheated high-pressure steam. The steam generated is forced through a backpressure steam turbine(s) and the released steam is used to provide heat for the mill. The turbine and a generator connected thereto produce electricity needed to power the mill.

Wood contains small amounts of potassium (K) and chlorine (Cl). These elements remain in the black liquor during cooking. In the recovery boiler, these elements are enriched into the fly ash and increase the corrosiveness of the flue gas especially in the superheater. The corrosiveness of Cl and K increase with temperature. The corrosiveness of Cl and K impose an upper temperature limit on the steam generated in the recovery boiler. This limit for the superheated steam is typically 400° to 490°C, depending on the content of chlorine and potassium. With special materials or with liquors having a very low Cl and K content, steam temperatures up to 520°C have been used. Because the corrosiveness of Cl and K generally require the temperature of the superheated steam to be held relatively low, the steam pressure is also low. These temperature limitations result in low power yield from the heat generated in the recovery boiler, as compared to normal power boilers fuelled by coal, natural gas or oil.

These temperature limitations on the steam in a recovery boiler are not as strictly valid with bark originating from logs, but the fly ash from bark combustion in a bark boiler may also contain chlorine and potassium. As the sulfur content of bark is very low, potassium reacts in the bark boiler with chlorine and forms KCI, which in turn may result in superheater corrosion. Calorimetric flow in bark is also much lower than in the black ("waste") liquor flow, due to much lower mass flow.

New power cycles developed to replace the traditional recovery boiler and steam turbine cycle have been studied, and pressurized gasification of "waste" liquor and bark appears to have promising possibilities. However, much more development appears to be needed before these technologies have the necessary reliability and performance. Atmospheric gasification of wood and bark in fluidized bed gasifiers has been in commercial use since 1983 in pulp mills for producing combustible gas to be used in lime reburning kilns as a substitute for fossil fuels. However, efficient methods have not, to the best of our knowledge, been developed for increasing the temperature and pressure of superheated steam produced at a recovery boiler plant of a pulp mill in such a way that no corrosion occurs or the rate of corrosion is at acceptable levels. Accordingly, there is a long felt need for a method to increase the power yield in energy production at a pulp mill without corrosion problems, and at the same time minimize the need for fossil fuels in pulp mills.

In a first embodiment of the invention, steam is heated in a recovery boiler to such a degree that high temperature corrosion does not take place. The steam is heated to below 520°C, and optimally between 480 and 500°C. Thereafter, the steam is superheated to 500° to 600°C (and optimally to 520° to 560°C) in a superheater(s) in a special combustion process in which clean fuel is burned so as to avoid high temperature corrosion. The clean fuel is generated by gasification using a wood-based fuel.

The present invention is a method of producing energy at a pulp according to claim 1.

The invention may gasify atmospherically solid wood-based fuels, such as wood, wood chips, bark chips, hogged wood, planer shavings, saw dust, wood-based forest residues, utilizing a gasifying method known to produce a combustible gas. These combustible gases are, at least in part, burned in a separate superheating boiler and used to superheat the steam produced in a recovery boiler.

In a further embodiment of the invention, the temperature of the saturated and/or partially superheated steam produced by the superheater of the recovery boiler is limited to a level at which no boiler corrosion takes place or the corrosion rate is acceptably low. The limit temperature depends on the corrosion conditions in the recovery boiler. In Scandinavian conditions, the temperature limit is in a range of typically 480° to 500°C. In practice, the corrosion temperature limit range is wide, e.g., 400° to 520°C, because of variations of the Cl and K levels in black liquor and the resulting fly ash and so called "carryover", which is a char-containing type of fly ash. The final superheating step occurs in a separate superheater, where the steam temperature reaches the final level, typically 450° to 600°C, preferably 500° to 560°C, and most preferably 530° to 560°C. Depending on the development of superheater materials, a temperature as high as 600°C may be an acceptable limit.

The combustible gas generated from wood material contains alkaline compounds, such as sodium and potassium compounds, and chlorine-containing compounds, which may form alkaline chloride compounds, such as NaCl and KCI. The alkaline chloride compounds can cause corrosion at the high temperatures prevailing in the superheater. The combustible gas from bark or wood gasification can be made non-corrosive by adding sulfur or sulfur-containing gas, such as non-condensable gases from cooking or foul condensate stripping, and by injecting sulfur-containing oil into the combustible gas flow from the gasifier. Another technique for reducing the corrosiveness of the combustible gas is to burn the above-mentioned sulfur-containing fuels in gas burners of the superheating boiler. Cleaning for removing alkaline dust from the combustible gas prior to combustion in the superheater should also provide non-corrosive conditions at higher metal temperatures in the superheater. Some of the combustible gas can be used in a lime kiln to replace fossil fuels like oil and gas, resulting in an improvement in the greenhouse gas balance of the mill.

According to another embodiment of the invention, a system is provided for producing energy at a pulp mill. The system comprises: a recovery boiler having a furnace for combusting black liquor to produce flue gases; heat surfaces in the recovery boiler for recovering heat from the flue gases to generate steam; a superheating boiler connected to the heat surfaces of the recovery boiler for introducing the steam to the superheating boiler; a gasifier for gasifying solid wood-fuel, such as bark, to produce a combustible gas, and a conduit for supplying the combustible gas from the gasifier to the superheating boiler to burn the gas therein.

Several advantages may be achieved by means of the invention including (without limitation) the following:
A. By increasing the pressure and the operating temperature of the steam recovered from the waste liquor recovery process by means of the superheating boiler, the overall electrical efficiency of the plant is improved, and more power is generated by the heat recovered in the steam; and
B. When using bark or other wood wastes as a source of heat no carbon dioxide emissions are generated, contrary to situations in which fossil fuels, such as natural gas or heavy fuel oil, are used. As is known, a modem pulp mill is over-self-sustaining in-respect to energy, even if bark and corresponding wood wastes are not utilized. The present invention allows for the utilization of all or some of the wood bark produced in a pulp mill.

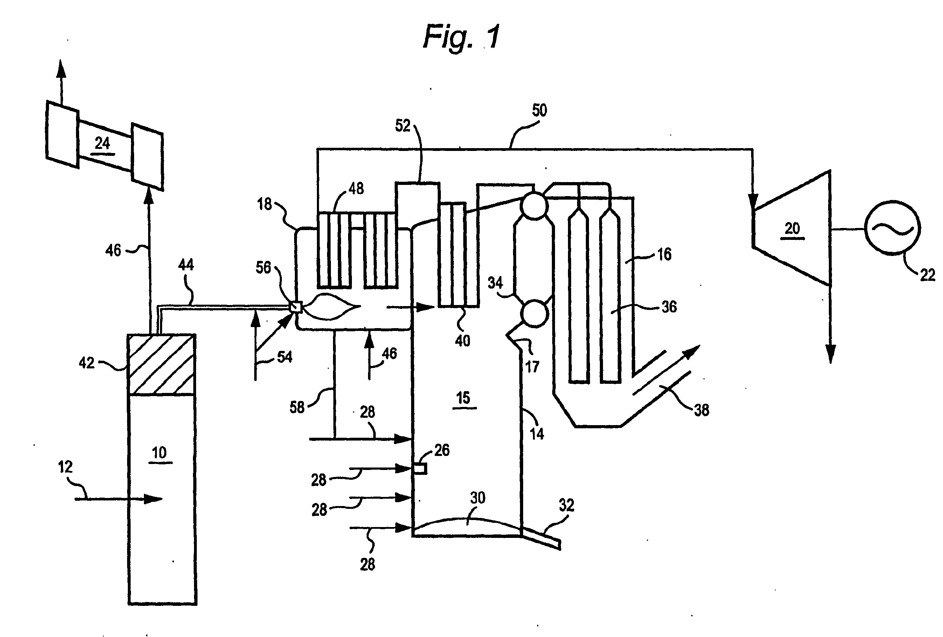

In the following, the invention is described in more detail with reference to the accompanying Figure 1, which is a schematic diagram of a unit for recovering energy from waste liquor in a pulp mill.

FIGURE 1 illustrates a unit for recovering energy from waste liquor comprising a gasifier 10, a waste liquor recovery boiler 14, a heat recovery section 16 connected thereto, a separate superheating boiler 18, a steam turbine 20, a generator 22, and a lime reburning kiln 24. Black liquor is sprayed via nozzles 26 into the recovery boiler 14. Combustion air is supplied to the recovery boiler through lines 28 at several levels of the boiler. Molten, inorganic matter (a product of the combustion of the black liquor) flows through a char bed 30 accumulated on the bottom of the recovery boiler and to an outlet 32 that discharges into a dissolving tank (not shown).

In the recovery boiler 14 and in the heat recovery section 16, heat is recovered from the flue gases by vaporizing surfaces 34 and water preheaters 36. Flue gases are discharged from the boiler through a duct 38. The steam can be partially heated in the recovery boiler by the superheating surfaces 40.

It is preferable to dry the wood material to be gasified. Gases generated from dry wood contain more combustible components, than do gases produced from damp wood. A higher portion of combustibles in gases increases the efficiency of combustion. Wood may material may be dried by the flue gases from the recovery boiler or a lime reburning kiln. For example, wood bark may be dried with flue gases from a lime reburning kiln. Such a drying process is described in U.S. Patent No. 5,103, 743, which is incorporated herein by reference.

Dried wood fuel, such as bark, is supplied through a line 12 to the gasification stage 10, which may be a circulating fluid bed (CFB) gasifier. Other well-known gasifiers may also be applicable. Combustible gas generated in the gasifier flow through a line 44 to the superheating boiler 18. However, a portion of the combustible gas may flow through line 46 to the lime reburning kiln 24.

The corrosion of the heat surfaces 48 in the superheating boiler is reduced by additional combustion of sulphurous fuel, preferably non-condensable gases from the cooking plant and/or from the foul condensate stripping process. The sulphurous fuel is supplied through line 54 and added to the combustible gas flow in line 44 or in burners 56. Sulfur reacts with alkali in the combustible gas to prevent or reduce the formation of alkaline chlorine compounds, which could, if allowed to form, cause corrosion in the superheating boiler, especially while at high temperatures.

The addition of sulfur to the fuels to inhibit corrosion is an inexpensive, simple and thus may be a primarily used method to reduce boiler corrosion. While other known and more efficient corrosion inhibition methods may be used, such methods generally require the flue gas to be purified. Purification devices increase the capital costs of the pulping plant. Flue gas from the gasifier 10 may be purified in a purification unit 42 and then flow to the superheating boiler 18 or the lime reburning kiln 24. The purification unit removes from the gas the alkali components, which are detrimental in the subsequent corrosion reduction processes. Combustion air is supplied to the superheating boiler through a line 46. The combustion in the superheater 18 is normally complete with excess optimized air, but stoichiometric or reducing combustion is also possible, and may be preferable in some applications.

Superheating surfaces 48 are disposed in the superheating boiler for superheating the saturated and/or partially superheated steam coming from the recovery boiler through steam pipes 52. The superheated steam is led through a line 50 to the steam turbine plant. A turbine 20 and generator 22 in the plant produce electric power.

Off-gases from the superheating boiler 18 are fed into the recovery boiler, preferably to the inlet of the superheater 40, where they are mixed with the main flue gas stream coming from the boiler furnace. Other possible locations for the off-gas inlets include the whole area from the lower part of the furnace to the inlet of the economizer 16. The off-gases can be fed through lines 58 and 28 to the furnace.

The flue gases from the superheating boiler 18 may be used to shape a flue gas flow pattern, from the furnace 15 of the recovery boiler over the "bull nose" 17 to improve gas distribution and heat transfer into the superheaters, or to generate conditions required for emission control, such as the optimum temperature window for selective non-catalytic reduction (SNCR) to reduce NOₓ emissions, or for particle size growth to reduce fine particle (size less than 2.5 micrometers) emissions. Another possibility is to use these flue gases for shaping the flow pattern in the furnace 15 to improve mixing, e.g., introducing these gases via vertically located ports, as is described in European patent 668,983 (incorporated by reference herein), instead of air or mixed with air.

Combustion in the superheating boiler 18 may be performed also under substoichiometric conditions. Reduced gases thus generated can be introduced into flue gases from the furnace 15 to reduce nitrogen oxide emissions in the flue gases coming from the furnace. It is known that certain fuels are more effective than others in reburning for reducing the content of nitrogen oxides in flue gases from the furnace of a recovery boiler. Reburning fuels can also be introduced into the flue gas flow(s) from the superheating boiler to improve gas mixing.

The invention is not intended to be limited to the embodiment illustrated and described above but it can be modified and varied within the scope and spirit of the invention as defined by the following claims. For example, both gasification and superheating can be carried out at a raised pressure whereby the general advantages of a pressurized plant are achieved.

## Claims

1. A method of producing energy at a pulp mill having a gasifier, a recovery boiler, and a superheating boiler, said method comprising:
a) combusting waste liquor from a pulping process in a furnace of the recovery boiler to generate flue gases;
b) recovering heat from the flue gases to produce steam in the recovery boiler ;
c) gasifying a solid wood-based material in a gasifier to produce a combustible gas,
d) burning at least part of the combustible gas in the superheating boiler, wherein a sulfur-containing fuel is burned with the combustible gas, and
e) feeding the steam from the recovery boiler to the superheating boiler and superheating the steam in the superheating boiler to produce superheated steam.

2. A method as recited in claim 1, wherein the steam is superheated to a temperature in a range of 450 to 600 degrees Celsius.

3. A method as recited in claim 1, wherein the steam is superheated to a temperature in a range of 500 to 560 degrees Celsius.

4. A method as recited in claim 1, wherein the steam is superheated to a temperature in a range of 530 to 560 degrees Celsius.

5. A method as recited in any of the preceding claims, further comprising cleaning the combustible gas from step (c) before step (d).

6. A method as recited in claim 1, wherein the sulfur-containing fuel is a non-condensable gas generated by the pulp mill.

7. A method as recited in any of the preceding claims, wherein the burning of the combustible gas is effected under overstoichiometric conditions.

8. A method as recited in any of the preceding claims, wherein flue gases are generated in step d) and the flue gases flow into a furnace of the recovery boiler.

9. A method as recited in claim 8, wherein the flue gases flow into the furnace of the recovery boiler to increase gas mixing in the furnace.

10. A method as recited in claim any of the preceding claims 1-6, wherein burning of the combustible gas is under substoichiometric conditions, and flue gases are generated and flow into a furnace of the recovery boiler.

11. A method as recited in claim 8, wherein the flue gases generated in step d) are mixed with flue gases generated in step a).

12. A method as recited in claim 1, wherein a portion of the combustible gas is burned in a lime reburning process.

13. A method as recited in any of the preceding claims, wherein the solid woodbased material is dried before gasification.

14. A method as recited in any of the preceding claims, wherein the solid wood-based material is bark.

## Patentansprüche

1. Verfahren zur Energieerzeugung in einer Zellstofffabrik, die einen Vergaser, einen Regenerierungskessel und einen Überhitzungskessel aufweist, wobei das Verfahren umfasst:
a) Verbrennen von Abfallflüssigkeit aus einem Aufschlussprozess in einem Ofen des Regenerierungskessels, um Rauchgase zu erzeugen;
b) Rückgewinnen von Wärme aus den Rauchgasen, um Dampf in dem Regenerierungskessel zu erzeugen;
c) Vergasen eines festen, Holz-basierten Materials in einem Vergaser, um ein brennbares Gas zu erzeugen,
d) Abbrennen zumindest eines Teils des brennbaren Gases in dem Überhitzungskessel, wobei ein schwefelhaltiger Brennstoff mit dem brennbaren Gas abgebrannt wird, und
e) Zuführen des Dampfes aus dem Regenerierungskessel an den Überhitzungskessel und Überhitzen des Dampfes in dem Überhitzungskessel, um überhitzten Dampf zu erzeugen.

2. Verfahren gemäß Anspruch 1, wobei der Dampf auf eine Temperatur in einem Bereich von 450 bis 600 °C überhitzt wird.

3. Verfahren gemäß Anspruch 1, wobei der Dampf auf eine Temperatur in einem Bereich von 500 bis 560 °C überhitzt wird.

4. Verfahren gemäß Anspruch 1, wobei der Dampf auf eine Temperatur in einem Bereich von 530 bis 560 °C überhitzt wird.

5. Verfahren gemäß einem der vorhergehenden Ansprüche, ferner ein Reinigen des brennbaren Gases aus Schritt (c) vor Schritt (d) umfassend.

6. Verfahren gemäß Anspruch 1, wobei der schwefelhaltige Brennstoff ein nicht-kondensierbares Gas ist, das durch die Zellstofffabrik erzeugt wird.

7. Verfahren gemäß einem der vorhergehenden Ansprüche, wobei das Abbrennen des brennbaren Gases unter überstöchiometrischen Bedingungen bewirkt wird.

8. Verfahren gemäß einem der vorhergehenden Ansprüche, wobei Rauchgase in Schritt d) erzeugt werden, und die Rauchgase in einen Ofen des Regenerierungskessels hinein strömen.

9. Verfahren gemäß Anspruch 8, wobei die Rauchgase in den Ofen des Regenerierungskessels hinein strömen, um eine Gasvermischung in dem Ofen zu erhöhen.

10. Verfahren gemäß einem der vorhergehenden Ansprüche 1 bis 6, wobei ein Abbrennen des brennbaren Gases unter stöchiometrischen Bedingungen erfolgt, und Rauchgase erzeugt werden und in einen Ofen des Regenerierungskessels hinein strömen.

11. Verfahren gemäß Anspruch 8, wobei die Rauchgase, die in Schritt d) erzeugt werden, mit den in Schritt a) erzeugten Rauchgasen vermischt werden.

12. Verfahren gemäß Anspruch 1, wobei ein Teil des brennbaren Gases in einem Kalkrückbrennungsprozess abgebrannt wird.

13. Verfahren gemäß einem der vorhergehenden Ansprüche, wobei das feste Holz-basierte Material vor einer Vergasung getrocknet wird.

14. Verfahren gemäß einem der vorhergehenden Ansprüche, wobei das feste Holz-basierte Material Rinde ist.

## Revendications

1. Procédé de production d'énergie au niveau d'un broyeur de pulpe ayant un gazéifieur, une chaudière de récupération et une chaudière à surchauffe, ledit procédé comprenant :
a) la combustion de liquide résiduaire provenant d'un processus de mise en pâte dans un four de la chaudière de récupération pour produire des gaz de carneau ;
b) la récupération de chaleur provenant des gaz de carneau pour produire de la vapeur dans la chaudière de récupération ;
c) la gazéification d'une matière à base de bois massif dans un gazéifieur pour produire un gaz combustible,
d) le brûlage d'au moins une partie du gaz combustible dans la chaudière à surchauffe, dans lequel un carburant contenant du soufre est brûlé avec le gaz combustible, et
e) l'amenée de la vapeur depuis la chaudière de récupération à la chaudière à surchauffe et la surchauffe de la vapeur dans la chaudière à surchauffe pour produire de la vapeur surchauffée.

2. Procédé selon la revendication 1, dans lequel la vapeur est surchauffée à une température dans une plage de 450 à 600 degrés Celsius.

3. Procédé selon la revendication 1, dans lequel la vapeur est surchauffée à une température dans une plage de 500 à 560 degrés Celsius.

4. Procédé selon la revendication 1, dans lequel la vapeur est surchauffée à une température dans une plage de 530 à 560 degrés Celsius.

5. Procédé selon l'une quelconque des revendications précédentes, comprenant en outre le nettoyage du gaz combustible provenant de l'étape (c) avant l'étape (d).

6. Procédé selon la revendication 1, dans lequel le carburant contenant du soufre est un gaz ne pouvant pas être condensé produit par le broyeur de pulpe.

7. Procédé selon l'une quelconque des revendications précédentes, dans lequel le brûlage du gaz combustible est effectué sous des conditions sur-stoechiométriques.

8. Procédé selon l'une quelconque des revendications précédentes, dans lequel des gaz de carneau sont produits dans l'étape d) et les gaz de carneau s'écoulent dans un four de la chaudière de récupération.

9. Procédé selon la revendication 8, dans lequel les gaz de carneau s'écoulent dans le four de la chaudière de récupération pour augmenter le mélange de gaz dans le four.

10. Procédé selon l'une quelconque des revendications 1 à 6, dans lequel le brûlage du gaz combustible s'effectue sous des conditions sous-stoechiométriques, et des gaz de carneau sont produits et s'écoulent dans un four de la chaudière de récupération.

11. Procédé selon la revendication 8, dans lequel les gaz de carneau produits dans l'étape d) sont mélangés avec des gaz de carneau produits dans l'étape a).

12. Procédé selon la revendication 1, dans lequel une partie du gaz combustible est brûlée dans un processus de recalcination de la chaux.

13. Procédé selon l'une quelconque des revendications précédentes, dans lequel la matière à base de bois massif est séchée avant gazéification.

14. Procédé selon l'une quelconque des revendications précédentes, dans lequel la matière à base de bois massif est de l'écorce.
